# EUROPÄISCHE PATENTSCHRIFT

(11) **EP 1 301 325 B1**
(45) Veröffentlichungstag und Bekanntmachung des Hinweises auf die Patenterteilung: **28.04.2004**
(21) Anmeldenummer: 01967186.6
(22) Anmeldetag: 17.07.2001
(51) Int. Cl.: B29C 45/16, A46B 5/02

(54) **VERFAHREN ZUR HERSTELLUNG VON DICKWANDIGEN BÜRSTEN, INSBESONDERE ZAHNBÜRSTEN**
METHOD FOR THE PRODUCTION OF THICK-WALLED BRUSHES, IN PARTICULAR, TOOTHBRUSHES
PROCEDE DE FABRICATION DE BROSSES A MANCHE EPAIS, EN PARTICULIER DE BROSSES A DENTS

(30) Priorität: 18.07.2000 DE 10034839
(43) Veröffentlichungstag der Anmeldung: 16.04.2003
(73) Patentinhaber: M + C Schiffer GmbH, 53577 Neustadt-Wied (DE)
(72) Erfinder: MEYER, Berthold, 53577 Neustadt/Wied (DE); WALGENBACH, Andreas, 53567 Buchholz (DE); SEIFERT, Armin, 56566 Neuwied (DE)
(74) Vertreter: Grünecker, Kinkeldey, Stockmair & Schwanhäusser Anwaltssozietät
(86) Internationale Anmeldenummer: PCT/EP2001/008204
(87) Internationale Veröffentlichungsnummer: WO 2002/006034

(56) Entgegenhaltungen:
- WO-A-94/05183
- WO-A-99/17915
- DE-A- 4 408 426
- DE-A- 19 722 551
- DE-A- 19 858 102
- DE-U- 29 910 576
- US-A- 4 330 578
- PATENT ABSTRACTS OF JAPAN vol. 1999, no. 8, 30. Juni 1999 (1999-06-30) -& JP 11 075938 A (SHIN ETSU POLYMER CO LTD), 23. März 1999 (1999-03-23)

## Beschreibung

Die vorliegende Erfindung betrifft ein Verfahren zur Herstellung von dickwandigen Bürsten, insbesondere Zahnbürsten, mit einem Griffstück und einem Borstenfilamente tragenden Bürstenkopf.

Derartige Bürsten werden üblicherweise im Wege des Spritzgießens hergestellt. Es ist bekannt, das Griffstück mit einem Grundkörper aus einer Hartkomponente auszubilden, welcher teilweise mit einer Weichkomponente umspritzt wird, um Griffflächen für eine sichere Halterung der Bürste auszubilden.

Unter dem Aspekt einer guten Haptik wird bei Bürsten, insbesondere Zahnbrüsten ein hinreichend dimensioniertes Griffstück gefordert. Bürsten mit einem relativ dünnen Griffstück können von Kindern und behinderten Menschen kaum noch sicher gehandhabt werden. Andererseits ist es im Hinblick auf eine möglichst kurze Zykluszeit bei der spritzgießtechnischen Herstellung der Bürsten zu bevorzugen, das Griffstück möglichst dünnwandig auszubilden. Bei dünnwandigen Griffstücken lassen sich kurze Abkühl- und Nachdruckzeiten ohne Oberflächendefekte an dem spritzgegossenen Bauteil erzielen. Die Produktivität ist demnach bei guter Produktqualität hoch.

Der vorliegenden Erfindung liegt die Aufgabe zugrunde, ein Verfahren zur Herstellung von Bürsten anzugeben; mit welchem verhältnismäßig dickwandige Bürsten bei guter Oberflächenqualität mit hoher Produktivität hergestellt werden können.

Das zur Lösung der obigen Aufgabe mit der vorliegenden Erfindung vorgeschlagene Verfahren wird in Anspruch 1 angegeben und ist dadurch gekennzeichnet, dass ein in einem ersten Spritzgießzyklus hergestellter Kern zur Ausbildung eines mehrschichtigen Griffstücks in mindestens einem nachfolgenden Spritzgießzyklus mit einer Kunststoffkomponente überzogen wird.

Bei dem erfindungsgemäßen Verfahren wird das Griffstück der Bürste in mehreren nachfolgenden Spritzgießzyklen hergestellt. Dadurch lassen sich im Gegensatz zum vorbekannten Stand der Technik, bei dem der Grundkörper, welcher ggf. in einem nachfolgenden Spritzgießzyklus mit einer Weichkomponente umspritzt wird, in einem einzigen Spritzgießzyklus ausgeformt wird, einen Grundkörper aufweisende Griffstücke bei verhältnismäßig kurzen Nachdruck- und Abkühlzeiten ausbilden. Der für das Umsetzen des Kerns in ein weiteres, größer dimensioniertes Formnest einer Spritzgießform zum Umspritzen des Kernes mit einer weiteren Schicht erforderliche Aufwand wird durch insgesamt kurze Abkühl- und Nachdruckzeiten und die gute Oberflächenqualität des fertigen Produktes gerechtfertigt.

Gemäß einer bevorzugten Weiterbildung des erfindungsgemäßen Verfahrens sind die Zeiten einerseits zur Ausformung des Kerns und andererseits zur Ausformung des in dem nachfolgenden Spritzgießzyklus hergestellten Überzugs zwischen dem Einspritzen der Kunststoffmasse und dem Abkühlen auf eine das formstabile Entformen erlaubende Temperatur in etwa gleich, vorzugsweise identisch. Bei dieser bevorzugten Weiterbildung werden sowohl der Kern als auch der Überzug in demselben Spritzgießwerkzeug hergestellt. Demnach erfolgt in einem einzigen Spritzgießzyklus zum einen das Ausformen des Kerns und zum anderen das Ausformen eines Überzugs über den in dem vorherigen Zyklus hergestellten Kern in demselben Werkzeug. Die Dimensionierung von Kern einerseits und Überzug andererseits erlaubt das zeitgleiche Ausformen beider Teile der Bürste mit identischen Zykluszeiten. Eine dickwandige Bürste kann bei dieser bevorzugten Weiterbildung des erfindungsgemäßen Verfahrens in der kürzest möglichen Zeit mit Spritzgießen hergestellt werden.

Vorzugsweise wird bei dem erfindungsgemäßen Verfahren in dem ersten Spritzgießzyklus der Kern mit einem Griffstielkem, dem Halsbereich und dem Bürstenkopf ausgeformt. In dem nachfolgenden Spritzgießzyklus wird ausschließlich ein den Griffstielkem voll umfänglich umgebender Mantel ausgeformt. In diesem Fall wird die Zykluszeit für den ersten Spritzgießzyklus durch die Form und Abmessungen des Bürstenkopfes bzw. des Griffstieles bestimmt. Die Abmessung des Griffstielkemes ist derart gewählt, dass auch der Griffstiel nach Erreichen einer die formstabile Entformung des Bürstenkopfes und/oder des Halsbereiches erlaubenden Abkühlzeit zu einem formstabilen Bauteil abgekühlt ist. Erst in dem nachfolgenden Spritzgießzyklus wird der Griffstiel durch Überzug mit einer Kunststoffkomponente auf die Abmessung und Form des Endproduktes gebracht. Bei besonders dicken Griffstielen ist es möglich, neben einem nachfolgenden Spritzgießzyklus zur Ummantelung des Griffstielkernes einen weiteren Spritzgießzyklus vorzusehen, in dem eine weitere, den Griffstielkern voll umfänglich umgebende Schicht ausgeformt wird. Auch diese weitere Schicht kann in demselben Spritzgießwerkzeug hergestellt werden. Wesentlich für die Einhaltung möglichst kurzer Herstellungszeiten ist, dass die jeweiligen Dicken der in einem einzelnen Spritzgießzyklus hergestellten Schichten bzw. des Kernes eine nahezu identische Zykluszeit für die Ausformung sämtlicher Teilbereiche der Bürste erlauben.

Eine besonders kostengünstige Ausführungsform wird dadurch geschaffen, dass der den Griffstiel voll umfänglich umgebende Kern aus einem kostengünstigen Kunststoff, insbesondere Rezyklat ausgebildet wird und dass in einem weiteren Spritzgießzyklus der den Griffstielkern umgebende Mantel umspritzt wird. Die Umspritzung in dem weiteren Spritzgießzyklus erfolgt vorzugsweise aus einem hochwertigen Kunststoff, insbesondere einer Hartkomponente, die keine oder nur wenig Anteile an Rezyklat enthält. Die Kostenersparnis durch den Einsatz preisgünstiger Kunststoffe wird dadurch weiter verbessert, dass auch in dem ersten Spritzgießzyklus ein Rezyklat verwendet wird. Lediglich die in dem weiteren Spritzgießzyklus hergestellte Umspritzung des Griffstielkerns oder aber des gesamten Bürstenkörpers sollte aus einem hochwertigen Kunststoff mit geringen oder keinen Anteilen an Rezyklat hergestellt werden, um eine Bürste mit guten Oberflächeneigenschaften zu schaffen.

Der mit dem erfindungsgemäßen Verfahren hergestellte, mehrschichtig ausgebildete Grundkörper des Griffstückes kann in einem weiteren Verfahrensschritt mit einer weichelastischen Komponente umspritzt werden, wie dies allgemein aus dem Stand der Technik bekannt ist.

Vorzugsweise wird der Kern des Griffstückes aus einem kostengünstigen Kunststoff, insbesondere einem Rezyklat gebildet. Dieser Kem kann durchaus Oberflächendefekte aufweisen, so dass insbesondere die Abkühl- und Nachdruckzeit für den spritzgegossenen Kem geringer gewählt werden können, als zur Ausbildung eines fehlerfreien Spritzgießteiles mit guter Oberfläche erforderlich. Durch diese Maßnahme wird die Produktivität erhöht, ohne jedoch die Oberflächenqualität des fertigen Griffstückes zu beeinträchtigen.

Gemäß einer weiteren bevorzugten Ausgestaltung des erfindungsgemäßen Verfahrens wird vor dem Aufbringen einer ersten oder weiteren Kunststoffschicht die Außenfläche des Kernes und/oder eines Zwischenproduktes, welches durch einen ein- oder mehrschichtig überzogenen Kern gebildet wird, dekoriert. Nachfolgend wird diese dekorierte Außenfläche mit einer transparenten Kunststoffkomponente überzogen. Durch diese bevorzugte Verfahrensführung ist es möglich, Schriftzüge oder zwei- oder dreidimensionale Dekors an dem Grundkörper auszubilden, ohne hierdurch die aus hygienischer Sicht zu bevorzugende glatte Oberfläche des Griffstücks zu beeinträchtigen. Das Dekorieren der Außenfläche des Kernes bzw. des Zwischenproduktes erfolgt vorzugsweise mittels Heißprägen.

Es hat sich herausgestellt, dass eine Schicht von 15 bzw. 50 % der Dicke des Kernes bzw. des Zwischenproduktes bei verhältnismäßig kurzer Nachdruck- und Abkühlzeit aufgebracht werden kann. Mit einer derartigen Verfahrensführung lässt sich eine kurze Zykluszeit verwirklichen.

Weitere Einzelheiten, Vorteile und Merkmale der vorliegenden Erfindung ergeben sich aus der nachfolgenden Beschreibung eines Ausführungsbeispieles in Verbindung mit der Zeichnung, in dem eine Zahnbürste in aufeinanderfolgenden Schritten eines Herstellungsverfahrens gezeigt ist. Im Einzelnen zeigen:
- Fig. 1: eine Draufsicht das Erzeugnis eines ersten Spritzgießzykluses;
- Fig. 2: das Erzeugnis eines zweiten Spritzgießzykluses und
- Fig. 3: das Erzeugnis eines dritten und letzten Spritzgießzykluses zur Herstellung einer Zahnbürste.

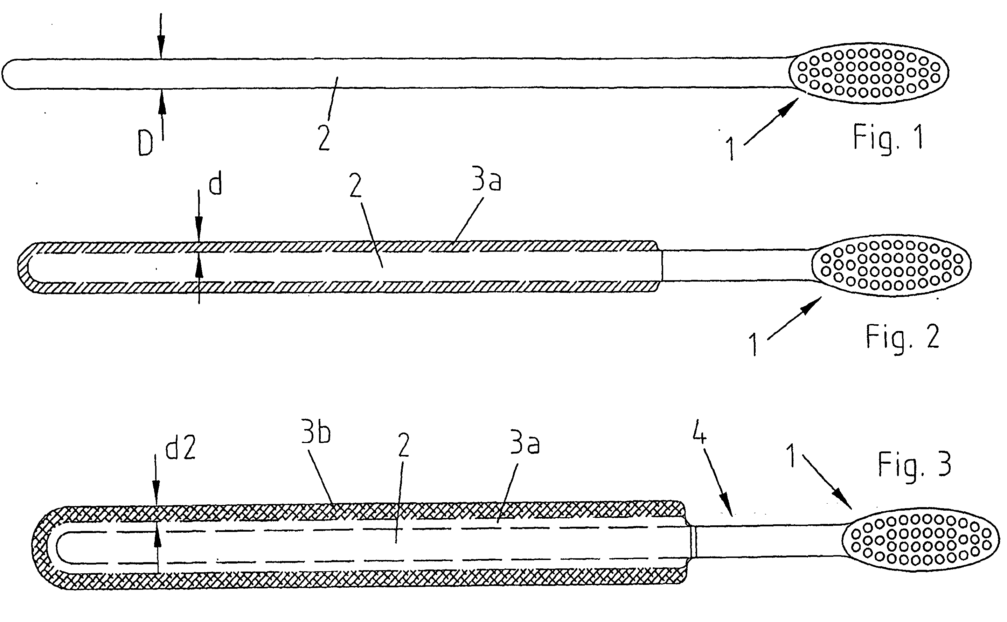

Das in Fig. 1 gezeigte Erzeugnis eines ersten Spritzgießzykluses wird in einem Formnest eines Spritzgießwerkzeuges durch Einspritzen einer Hartkomponente erzeugt. Das Formnest weist eine kopfseitige Kavität zur Ausbildung eines Bürstenkopfes 1 sowie eine dahinter angeordnete Kavität zur Ausformung eines Kernes 2 auf. Die hintere Kavität kommuniziert mit der vorderen Kavität und ist im Wesentlichen mit zylindrischem Querschnitt ausgebildet. Der Kern hat eine Dicke D.

Das in Fig. 1 gezeigte Zwischenprodukt wird in ein zweites Formnest der Kavität desselben oder eines anderen Spritzgießwerkzeuges umgesetzt, wie dies aus dem Stand der Technik allgemein bei Verfahren bekannt ist, bei denen ein in einem ersten Spritzgießzyklus hergestellter Grundkörper mit einem thermoplastischen Elastomer zur Ausbildung von Griff-Funktionsflächen umspritzt wird.

Dieses zweite Formnest weist eine vordere Kavität auf, welche identisch zu der des ersten Formnestes ist und den Bürstenkopf 1 sowie einen Halsbereich 4 aufnimmt, wohingegen die hintere, mit der vorderen Kavität gleichfalls kommunizierende Kavität, größer als die hintere Kavität des ersten Formnestes ist. In dieser zweiten hinteren Kavität wird der Kern 2 umfänglich mit Abstand zu der Wandung der hinteren Kavität angeordnet. Auch stirnseitig ist der Kern 2 zu der Wandung der hinteren Kavität beabstandet. In den Spalt, welcher zwischen der hinteren Kavität und der äußeren Umfangsfläche des Kernes 2 gebildet ist, wird in einem zweiten Spritzgießzyklus eine Hartkomponente eingespritzt. Der Kern 2 wird hierdurch voll umfänglich mit der eingespritzten Kunststoffkomponente überzogen. Nach diesem zweiten Spritzgießzyklus weist der Griffstiel einen einschichtigen Überzug 3a mit einem Kern 2 und einer ersten Schicht 3a auf.

Die erste Schicht 3a hat eine Dicke d, welche vorzugsweise zwischen 15 bis 50 % der Stärke D des Kernes 2 beträgt. Es hat sich herausgestellt, dass bei einer derartigen Verfahrensführung eine besondere kurze Abkühl- und Nachdruckzeit erzielt werden kann.

Das in Fig. 2 gezeigte Zwischenerzeugnis wird vorzugsweise in einem weiteren Verfahrensschritt dekoriert. Dabei wird auf der äußeren Umfangsfläche der ersten Schicht 3a vorzugsweise mittels Heißprägen ein Dekor und/oder eine Beschriftung, beispielsweise mit der Marke des Produktes, aufgebracht. Das derart behandelte Zwischenerzeugnis wird in ein drittes Formnest umgesetzt, welches eine vordere, den Bürstenkopf 1 und den Halsbereich 4 aufnehmende Kavität hat, welche identisch mit der entsprechenden Kavität des ersten und zweiten Formnestes ist, und welches eine hintere Kavität aufweist, welche umfänglich mit konstantem Abstand die äußere Umfangsfläche der ersten Schicht 3a umgibt. In den hierdurch entstehenden Spalt wird in einem dritten Spritzgießzyklus vorliegend eine transparente Hartkomponente eingespritzt. Diese äußere, transparente und die Dekorierung umgebende Schicht wird mit einer Stärke d₂ ausgebildet, die vorliegend etwa 40 % der Dicke des Kernes zuzüglich der zweifachen Dicke der ersten Schicht d entspricht. Danach beträgt die Dicke d₂ der zweiten Sicht 3b etwa 40 % der Dicke des Zwischenproduktes gemäß Fig. 2.

Das in Fig. 3 gezeigte Erzeugnis wird entformt und beispielsweise einem Beborstungsschritt zugeführt, in dem in an dem Bürstenkopf 1 ausgebildete Ausnehmungen mit Borstenbündeln bestückt werden. Hierdurch wird in dem vorliegenden Ausführungsbeispiel eine fertige Zahnbürste erhalten.

Das fertige Produkt weist einen Borstenbündel aufweisenden Bürstenkopf 1 sowie einen sich daran anschließenden verhältnismäßig schlanken Hals 4 auf. Das Griffstück ist verhältnismäßig dick und erlaubt eine gute Handhabung der fertiggestellten Bürste. Die Bürste kann bei relativ kurzen Abkühl- und Nachdruckzeiten hergestellt werden, wobei die Oberflächenqualität des Griffstückes allein durch die Oberfläche der zweiten Schicht bestimmt wird. Diese überdeckt zwei- oder dreidimensionale Dekorationen auf der äußeren Umfangsfläche der ersten Schicht 3a sowie eventuelle Fehlstellen an dem Kern 2 bzw. der ersten Schicht 3a aufgrund einer zügigen Entformung vor Beendung einer für eine einwandfreie Oberflächenqualität erforderlichen Nachdruck- und Abkühlzeit.

### Bezugszeichenliste

- 1.: Bürstenkopf
- 2.: Kern
- 3a: Erste Schicht
- 3b: Zweite Schicht
- 4: Halsbereich
- D: Dicke des Kernes
- d: Dicke der ersten Schicht
- d₂: Dicke der zweiten Schicht

## Patentansprüche

1. Verfahren zur Herstellung von Bürsten, insbesondere Zahnbürsten mit einem Griffstück und einem Borstenfilamente tragenden Bürstenkopf (1). bei dem in elnem ersten Spritzgießzyklus zunächst ein einen Halsbereich und einen Bürstenkopf aufweisender Grundkörper hergestellt wird, der Grundkörper danach in ein größeres Formnest umgesetzt wird und In einem nachfolgenden Spritzgießzyklus umspritzt wird, **dadurch gekennzeichnet, dass** der Grundkörper in dem ersten Spritzgießzyklus mit einem Griffkem (2) ausgebildet wird und dass der Griffkern (2) in dem nachfolgenden Spritzgießzyklus zur Ausbildung eines mehrschichtigen Griffstücks mit einer Hartkomponente umfänglich ummantelt wird.

2. Verfahren nach Anspruch 1, **dadurch gekennzeichnet, dass** der Griffkern (2) und der In dem nachfolgenden Spritzgießzyklus hergestellte umfängliche Überzug (3a) über den Kern (2) derart bemessen sind, dass die Zeiten zwischen dem Einspritzen und dem Abkühlen auf eine das formstabile Entformen erlaubende Temperatur für das Ausformen des Griffkems (2) einerseits und das Ausformen des Überzugs (3a; 3b) andererseits in etwa gleich, vorzugsweise identisch sind.

3. Verfahren nach Anspruch 1 oder 2, **dadurch gekennzeichnet, dass** in dem ersten Spritzgießzyklus der Kern mit einem Griffstielkern (2), einem Halsbereich (4) und einem Bürstenkopf (1) ausgeformt wird und dass in dem nachfolgenden Spritzgießzyklus ein den Griffstielkern (2) voll umfänglich umgebender Mantel (3a) ausgeformt wird.

4. Verfahren nach einem der vorherigen Ansprüche, **dadurch gekennzeichnet, dass** in einem weiteren Spritzgießzyklus der den Griffstielkern umgebende Mantel (3a) umspritzt wird.

5. Verfahren nach Anspruch 4, **dadurch gekennzeichnet, dass** der Mantel (3a) aus einem kostengünstigen Kunststoff, insbesondere Rezyklat gebildet wird.

6. Verfahren nach einem der vorherigen Ansprüche, **dadurch gekennzeichnet, dass** der Kern (2) aus einem kostengünstigen Kunststoff, insbesondere Rezyklat, gebildet wird.

7. Verfahren nach einem der vorherigen Ansprüche, **dadurch gekennzeichnet, dass** vor dem Aufbringen einer Kunststoffschicht (3a) die Außenfläche des Kernes (2) und/oder eines Zwischenproduktes dekoriert wird und dass die dekorierte Außenfläche mit einer transparenten Kunststoffkomponente überzogen, vorzugsweise umspritzt wird.

8. Verfahren nach Anspruch 7, **dadurch gekennzeichnet, dass** das Dekorieren mittels Heißprägen durchgeführt wird.

9. Verfahren nach einem der vorherigen Ansprüche, **dadurch gekennzeichnet, dass** die Kunststoffschicht mit einer Stärke von 15 bis 50 % der Dicke des Kernes bzw. des Zwischenproduktes überzogen wird.

10. Verfahren nach einem der vorherigen Ansprüche, **dadurch gekennzeichnet, dass** das Zwischenprodukt mit einer Hartkomponente überzogen wird.

11. Verfahren nach einem der vorherigen Ansprüche, **dadurch gekennzeichnet, dass** der Kern (2) und zumindest eine Schicht des Griffstücks stoffidentisch ausgebildet werden.

## Claims

1. A method of producing brushes, in particular toothbrushes, with a grip piece and a brush head (1) supporting bristle filaments, comprising the step of initially producing a basic body including a neck area and a brush head in a first injection moulding cycle, and the further steps of transferring said basic body then to a larger die cavity and encompassing it with material in a subsequent injection moulding cycle, **characterized in that** the basic body is formed with a grip-handle core (2) in said first injection moulding cycle, and that, in said subsequent injection moulding cycle, the circumference of the grip-handle core (2) is covered with a hard component so as to form a multi-layered grip piece.

2. A method according to claim 1, **characterized in that** the grip-handle core (2) and the coating (3a) produced on top of the circumference of the core (2) in the subsequent injection moulding cycle are dimensioned such that the times between injection and cooling to a temperature permitting the component in question to be removed from the mould in a dimensionally stable form are approximately equal, preferably identical, for the formation of the grip-handle core (2) on the one hand and for the formation of the coating (3a; 3b) on the other.

3. A method according to claim 1 or 2, **characterized in that**, in the first injection moulding cycle, the core is formed with a grip-handle core (2), a neck area (4) and a brush head (1), and that, in the subsequent injection moulding cycle, an outer cover (3a) is formed, which fully encloses the circumferential surface of said grip-handle core (2).

4. A method according to one of the preceding claims, **characterized in that**, in a further injection moulding cycle, the outer cover (3a) enclosing the grip-handle core (2) is encompassed by injection moulding.

5. A method according to claim 4, **characterized in that** the outer cover (3a) is formed of an inexpensive plastic material, especially a recycled plastic material.

6. A method according to one of the preceding claims, **characterized in that** the core (2) is formed of an inexpensive plastic material, especially a recycled plastic material.

7. A method according to one of the preceding claims, **characterized in that** the outer surface of the core (2) and/or of an intermediate product is decorated prior to the application of a layer of plastic material (3a), and that the decorated outer surface is coated, preferably encompassed by injection moulding, with a transparent plastic component.

8. A method according to claim 7, **characterized in that** the decorating step is carried out by means of hot-process embossing.

9. A method according to one of the preceding claims, **characterized in that** the layer of plastic material applied as a coating has a thickness in the range of from 15 to 50% of the thickness of the core and of the intermediate product, respectively.

10. A method according to one of the preceding claims, **characterized in that** the intermediate product is coated with a hard component.

11. A method according to one of the preceding claims, **characterized in that** the core (2) and at least one layer of the grip piece are formed of identical materials.

## Revendications

1. Procédé pour fabriquer des brosses, en particulier des brosses à dents, comprenant une poignée et une tête (1) qui porte des filaments, selon lequel on commence par fabriquer lors d'un premier cycle de moulage par injection un corps de base présentant une zone formant col et une tête de brosse, puis on transfère le corps de base dans une empreinte plus grande et on l'enrobe par injection lors d'un cycle de moulage par injection suivant, **caractérisé en ce que** lors du premier cycle de moulage par injection, on donne au corps de base la forme d'un noyau de poignée (2), et **en ce que** lors du cycle de moulage par injection suivant, on enrobe entièrement le noyau de poignée (2) avec un composant dur pour former une poignée multicouche.

2. Procédé selon la revendication 1, **caractérisé en ce que** le noyau de poignée (2) et le revêtement (3a) qui est réalisé sur toute la périphérie du noyau (2) lors du cycle de moulage par injection suivant sont dimensionnés de telle sorte que les durées qui s'écoulent entre l'injection et le refroidissement à une température permettant le démoulage indéformable sont à peu près égales et de préférence identiques pour la formation du noyau de poignée (2), d'une part, et pour la formation du revêtement (3a ; 3b), d'autre part.

3. Procédé selon la revendication 1 ou 2, **caractérisé en ce que** lors du premier cycle de moulage par injection, on donne au noyau la forme d'un noyau de poignée (2), d'une zone formant col (4) et d'une tête de brosse (1) et **en ce que** lors du cycle de moulage par injection suivant, on forme une gaine (3a) qui entoure complètement le noyau de poignée (2).

4. Procédé selon l'une des revendications précédentes, **caractérisé en ce que** lors d'un autre cycle de moulage par injection, on enrobe par injection la gaine (3a) qui entoure le noyau de poignée.

5. Procédé selon la revendication 4, **caractérisé en ce que** la gaine (3a) est formée à partir d'une matière plastique peu coûteuse, en particulier une matière recyclée.

6. Procédé selon l'une des revendications précédentes, **caractérisé en ce que** le noyau (2) est formé à partir d'une matière plastique peu coûteuse, en particulier une matière recyclée.

7. Procédé selon l'une des revendications précédentes, **caractérisé en ce qu'**avant d'appliquer une couche de matière plastique (3a), on décore la surface extérieure du noyau (2) et/ou d'un produit intermédiaire, et **en ce qu'**on recouvre, de préférence par injection, la surface extérieure décorée, à l'aide d'un composant de matière plastique transparent.

8. Procédé selon la revendication 7, **caractérisé en ce qu'**on réalise la décoration par estampage à chaud.

9. Procédé selon l'une des revendications précédentes, **caractérisé en ce que** la couche de matière plastique est appliquée sur une épaisseur qui représente 15 à 50 % de l'épaisseur du noyau ou du produit intermédiaire.

10. Procédé selon l'une des revendications précédentes, **caractérisé en ce qu'**on recouvre le produit intermédiaire avec un composant dur.

11. Procédé selon l'une des revendications précédentes, **caractérisé en ce que** le noyau (2) et au moins une couche de la poignée sont formés à partir de la même matière.
